(19) Europäisches Patentamt
European Patent Office
Office européen des brevets

(11) Veröffentlichungsnummer: **0 388 781 B1**

(12) **EUROPÄISCHE PATENTSCHRIFT**

(45) Veröffentlichungstag der Patentschrift: **09.02.94**

(51) Int. Cl.5: **C08G 18/08**, C08G 18/10, C08G 18/48, C09D 175/04

(21) Anmeldenummer: **90104865.2**

(22) Anmeldetag: **15.03.90**

# (54) Verfahren zur Herstellung von vernetzten Polyurethan-Polyharnstoff-Pulvern und ihre Verwendung als organische Füllstoffe in Zweikomponenten-Polyurethanlacken.

(30) Priorität: **23.03.89 DE 3909597**

(43) Veröffentlichungstag der Anmeldung:
**26.09.90 Patentblatt 90/39**

(45) Bekanntmachung des Hinweises auf die Patenterteilung:
**09.02.94 Patentblatt 94/06**

(84) Benannte Vertragsstaaten:
**BE CH DE ES FR GB IT LI NL**

(56) Entgegenhaltungen:
**EP-A- 0 296 098**
**DE-A- 2 906 159**
**US-A- 4 293 679**
**US-A- 4 403 083**

**CHEMICAL ABSTRACTS, vol. 106, no. 24, Juni 1987 Columbus, Ohio, USA &JP-A-61254658**

(73) Patentinhaber: **BAYER AG**

**D-51368 Leverkusen(DE)**

(72) Erfinder: **Reiff, Helmut, Dr.**
**Paul-Klee-Strasse 68i**
**D-5090 Leverkusen 1(DE)**
Erfinder: **Dieterich, Dieter, Prof. Dr.**
**H.T.- von-Böttinger-Strasse 16**
**D-5090 Leverkusen 1(DE)**
Erfinder: **Stepanek, René, Dr.**
**Dorfstrasse 47**
**CH-8422 Pfungen(CH)**

**EP 0 388 781 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von vernetzten Polyurethan-Polyharnstoff-Pulvern durch Vermischen von bestimmten, Isocyanatgruppen aufweisenden Semiprepolymeren mit Wasser und die Verwendung der Pulver als organische Füllstoffe in Zweikomponenten-Polyurethanlacken.

Unvernetzte Polyurethanpulver (PUR-Pulver) sind bekannt. Sie können beispielsweise durch Mahlen von Elastomergranulaten hergestellt werden. Nachteilig ist, daß das Mahlgut mit festem Kohlendioxid oder flüssigem Stickstoff gekühlt werden muß, und die Pulver unbefriedigende Oberflächenqualität aufweisen (vgl. Kunststoffe 74, 195 (1984)). Es ist weiterhin bekannt, wäßrige Polyurethandispersionen durch Sprühtrocknen in PUR-Pulver zu überführen. Auch in diesem Fall ergeben sich durch Wärmeeinfluß Verklebungen und somit Pulver von minderer Fließfähigkeit und Qualität (vgl. z.B. Houben-Weyl, Methoden der organ. Chemie, 4. Aufl., Band E20, S. 1697 (1987)).

Die Herstellung von unvernetzten PUR-Pulvern in organischer Lösung unter Verwendung von speziellen Emulgatoren wird beispielsweise in DE-OS 2 330 601 oder US-PS 4 032 516 offenbart. Die DE-OS 2 906 113 empfiehlt zur Herstellung von unvernetzten PUR-Pulvern das "Emulgator/Scherkraft-Verfahren", während gemäß DE-PS 2 226 526 die Herstellung von unvernetzten PUR-Pulvern nach dem Acetonverfahren möglich ist.

Vernetzte PUR-Pulver sind bislang noch wenig bekannt geworden. In der DE-PS 1 282 962 wird vorgeschlagen, acetonische Lösungen von schwach kationisch modifizierten NCO-Prepolymeren mit einem Gemisch aus Diaminen und Triaminen zu vernetzen. Die zum Einsatz gelangenden NCO-Prepolymeren weisen hierbei einen NCO-Gehalt von lediglich 1 bis 5 Gew.-% auf, so daß als Verfahrensprodukte nur schwach vernetzte Polyurethan-Polyharnstoffe resultieren, die Erweichungs- bzw. Schmelzbereiche von ca. 90 bis 180 °C aufweisen.

Die US-PS 4 403 083 beschreibt die Herstellung von Pulvern auf Basis von NCO-Prepolymeren mit einem sehr hohen Gehalt an eingebauten Ethylenoxideinheiten, was zwangsläufig zu extrem hydrophilen Pulvern führt, was sich in einer deutlichen Feuchtigkeitsaufnahme beim Lagern in feuchter Atmosphäre bemerkbar macht. Derartige Pulver sind jedoch als organische Füllstoffe in Zweikomponenten-Polyurethanlacken ungeeignet.

Wie jetzt überraschend gefunden wurde, gelingt es, wertvolle, vernetzte Polyurethan-Polyharnstoff-Pulver durch Vermischen von ausgewählten Isocyanat-Semiprepolymeren, die punktuell nichtionisch-hydrophil modifiziert sind, mit Wasser zu erhalten. Die dabei resultierenden Polyurethan-Polyharnstoff-Pulverstellen wertvolle Füllstoffe für beliebige Beschichtungsmittel, insbesondere für Zweikomponenten-Polyurethanlacke, dar und ermöglichen die Herstellung von Beschichtungen mit besonders hochwertigen Oberflächeneigenschaften.

Gegenstand der Erfindung ist ein Verfahren zur Herstellung von vernetzten Polyurethan-Polyharnstoff-Pulvern, dadurch gekennzeichnet, daß man bei Raumtemperatur flüssige und/oder in einem gegenüber Isocyanatgruppen inerten, wasserlöslichen Lösungmittel gelöste Isocyanat-Semiprepolymere mit einem NCO-Gehalt von 10 bis 20 Gew.-%, die durch Umsetzung von

a) einer Polyisocyanatkomponente, bestehend aus mindestens einem organischen Polyisocyanat ausgewählt aus Polyisocyanaten der Formel

$$Q(NCO)_n$$

und Urethan-,Biuret-,Uretdion, Carbodimid-, Uretonimin- und Isocyanuratmodifizierten Polyisocyanaten auf Basis dieser Polyisocyanate, wobei
n 2-4 und
Q einen aliphatischen Kohlenwasserstoffrest mit 2 bis 18, vorzugsweise 6 bis 10 C-Atomen,
einen cycloaliphatischen Kohlenwasserstoffrest mit 4 bis 15, vorzugsweise 5 bis 10 C-Atomen,
einen aromatischen Kohlenwasserstoffrest mit 6 bis 15, vorzugsweise 6 bis 13 C-Atomen,
oder einen araliphatischen Kohlenwasserstoffrest mit 8 bis 15, vorzugsweise 8 bis 13 C-Atomen,
bedeuten, mit

b) einer hydrophoben Polyolkomponente, bestehend aus mindestens einem Polyetherpolyol des Molekulargewichtsbereichs 400 bis 10.000, gegebenenfalls in Abmischung mit bis zu 10 Gew.-%, bezogen auf das Gesamtgewicht der Komponente b), an mehrwertigen Alkoholen eines unter 400 liegenden Molekulargewichts, wobei die Komponente b) weniger als 25 Gewichtsprozent an Ethylenoxideinheiten $-CH_2-CH_2-O-$ aufweist,
und

c) einer hydrophilen Polyetherkomponente, bestehend aus mindestens einem Alkohol, der eine Struktureinheit der Formel

$-(-CH_2-CHR-O-)_n-$

mit n = 15 bis 80 aufweist, wobei diese Struktureinheiten mindestens 70 Gew.-% des Gewichts der Komponente c) ausmachen, ausgewählt aus der Gruppe bestehend aus Polyethylenglykolen mit einem Molekulargewicht von 1000 bis 4000 und einwertigen Polyetheralkoholen von einwertigen Startermolekülen,

unter Einhaltung eines Äquivalentverhältnisses von Isocyanatgruppen zu gegenüber Isocyanatgruppen reaktionsfähigen Gruppen 5 : 1 bis 25 : 1 bei 20 bis 150° C hergestellt worden sind, wobei R jeweils für Wasserstoff oder eine Methylgruppe steht, mit der Maßgabe, daß mindestens 80 % der Reste R für Wasserstoff stehen, und wobei Art und Mengenverhältnisse der Komponente b) und c) so gewählt werden, daß die mittlere Hydroxylfunktionalität der Komponenten b) und c) bei 2,3 bis 4,0 liegt und die NCO-Semiprepolymeren einen Gehalt an, von der Komponente c) herrührenden, Struktureinheiten der Formel

$$-(-CH_2-\underset{\substack{| \\ R}}{C}H-O-)_n-$$

mit n = 15 bis 80 von 0,5 bis 12 Gew,-% aufweisen,
in Wasser dispergiert und das sich spontan bildende Pulver nach abgeklungener Reaktion aus dem wäßrigen Medium auf an sich bekannte Weise isoliert.

Die Polyisocyanatkomponente a) besteht aus mindestens einem organischen Polyisocyanat ausgewählt aus der Gruppe bestehend aus Polyisocyanaten der Formel

$Q(NCO)_n$

und Urethan-,Biuret-,Uretdion-, Carbodimid-, Uretonimin- und Isocyanurat-modifizierten Polyisocyanaten auf Basis dieser einfachen Polyisocyanate, wobei
n = 2 bis 4, vorzugsweise 2,
und

Q einen aliphatischen Kohlenwasserstoffrest mit 2 bis 18, vorzugsweise 6 bis 10 C-Atomen,
einen cycloaliphatischen Kohlenwasserstoffrest mit 4 bis 15, vorzugsweise 5 bis 10 C-Atomen,
einen aromatischen Kohlenwasserstoffrest mit 6 bis 15, vorzugsweise 6 bis 13 C-Atomen,
oder einen araliphatischen Kohlenwasserstoffrest mit 8 bis 15, vorzugsweise 8 bis 13 C-Atomen,
bedeuten.

Typische Beispiele sind 1,6-Diisocyanatohexan, 1,10-Diisocyanatodecan, 1-Isocyanato-3,3,5-trimethyl-5-isocyanatomethyl-cyclohexan (IPDI), 4,4'-Diisocyanato-dicyclohexylmethan, 2,4- und/oder 2,6-Diisocyanatotoluol, 4,4'-Diisocyanatodiphenylmethan, dessen Gemische mit 2,4'-Diisocyanatodiphenylmethan und gegebenenfalls 2,2'-Diisocyanatodiphenylmethan bzw. die Gemische dieser Isomeren mit ihren höheren Homologen, wie sie bei der an sich bekannten Phosgenierung von Anilin/Formaldehyd-Kondensaten anfallen. Ebenfalls geeignet sind, wie bereits angedeutet, Urethan-, Biuret-, Uretdion-, Carbodiimid-, Uretonimin- oder Isocyanurat-modifizierte Polyisocyanate auf Basis der beispielhaft genannten einfachen Polyisocyanate. Die Polyisocyanatkomponente a) weist im allgemeinen einen NCO-Gehalt von 20 bis 50 Gew.-% auf. Besonders bevorzugt besteht die Polyisocyanatkomponente a) aus 2,4-Diisocyanatotoluol, dessen Gemischen mit bis zu 35 Gew.-%, bezogen auf Gemisch, an 2,6-Diisocyanatotoluol, 1,6-Diisocyanatohexan, IPDI, 4,4'-Diisocyanatodiphenylmethan, dessen Gemischen mit 2,4'-Diisocyanatodiphenylmethan und gegebenenfalls 2,2'-Diisocyanatodiphenylmethan und/oder aus Gemischen dieser Isomeren mit ihren höheren Homologen, wie sie bei der Phosgenierung von Anilin/Formaldehyd-Kondensaten anfallen.

Die hydrophobe Polyolkomponente b) besteht aus mindestens einem Polyetherpolyol des Molekulargewichtsbereichs 400 bis 10 000, gegebenenfalls in Abmischung mit bis zu 10 Gew.-%, bezogen auf das Gesamtgewicht der Komponente b), an mehrwertigen Alkoholen eines unter 400 liegenden Molekulargewichts, wobei die Komponente b) weniger als 25 Gewichtsprozent an Ethylenoxideinheiten $-CH_2-CH_2-O-$ aufweist.

Die in der Komponente b) vorliegenden Polyetherpolyole werden auf an sich bekannte Weise durch Alkoxylierung geeigneter Startermoleküle erhalten, wobei als Startermoleküle beispielsweise Wasser, Ethylenglykol, Propylenglykol, Glycerin, Trimethylolpropan, Sorbit, oder Sucrose bzw. Gemische derartiger Startermoleküle in Betracht kommen, wobei jedoch Art und Mengenverhältnisse der Startermoleküle vorzugsweise so gewählt werden, daß Polyetherpolyole einer mittleren Hydroxylfunktionalität von 2,3 bis 4,0 resultieren. Bei der Herstellung der in der Komponente b) vorliegenden Polyetherpolyole wird als Alkylenoxid vorzugsweise Propylenoxid verwendet, gegebenenfalls zusammen mit Ethylenoxid, dessen Menge jedoch entsprechend den oben gemachten Ausführungen beschränkt sein muß.

Bei den gegebenenfalls neben den Polyetherpolyolen in der Komponente b) vorliegenden mehrwertigen Alkoholen eines unter 400 liegenden Molekulargewichts handelt es sich beispielsweise um die bereits genannten, als Startermoleküle geeigneten Polyole oder um niedermolekulare Polyetherpolyole wie beispielsweise Diethylenglykol, Triethylenglykol, Dipropylenglykol, Tripropylenglykol oder niedermolekulare Alkoxylierungsprodukte der höherwertigen Alkohole

Bei der hydrophilen Polyetherkomponente c) handelt es sich um mindestens einen ein- oder mehrwertigen Alkohol der mindestens eine Struktureinheit der Formel

$$-(-CH_2-\underset{\substack{|\\ R}}{C}H-O-)_n-$$

mit n = 15 bis 80 aufweist, wobei R Wasserstoff oder eine Methylgruppe bedeutet mit der Maßgabe, daß mindestens 80 %, vorzugsweise 100 %, der Reste R für Wasserstoff stehen. Die genannten Struktureinheiten machen mindestens 70 % des Gewichts der Komponente c) aus.

Als Komponente c) bzw. als Teil der Komponente c) geeignet sind beispielsweise Polyethylenglykole der oben definierten Art.

Als Komponente c) bzw. als Teil der Komponente c) ebenfalls geeignet sind einwertige Polyetheralkohole, die den soeben gemachten Ausführungen entsprechend unter Alkoxylierung von einwertigen Startermolekülen wie beispielsweise einem $C_1$-$C_4$-Alkanol hergestellt worden sind. Als Komponente c) bzw. als Teil der Komponente c) ferner geeignet sind beispielsweise seitenständig Polyetherketten der genannten Art aufweisende Diole wie sie gemäß US-PS 3 905 929 oder US-PS 4 190 566 als hydrophile Aufbaukomponenten empfohlen werden.

Bei der Herstellung der NCO-Semiprepolymeren werden Art und Mengenverhältnisse der Komponenten b) und c) so gewählt, daß die mittlere Hydroxylfunktionalität bei 2,3 bis 4,0 liegt und die NCO-Semiprepolymeren einen Gehalt an, von der Komponente c) herrührenden, Struktureinheiten der Formel

$$-(-CH_2-\underset{\substack{|\\ R}}{C}H-O-)_n-$$

mit n = 15 bis 80 von 0,5 bis 12 Gew.-%, vorzugsweise 1,0 bis 8,0 Gew.-% aufweisen.

Bei der Herstellung der NCO-Semiprepolymeren werden die genannten Ausgangsmaterialien im allgemeinen unter Einhaltung eines Äquivalentverhältnisses von Isocyanatgruppen zu gegenüber Isocyanatgruppen reaktionsfähigen Gruppen von 5:1 bis 25:1, vorzugsweise 5:1 bis 15:1 bei Temperaturen von 20 bis 150 ° C, vorzugsweise 60 bis 120 ° C miteinander zur Reaktion gebracht.

Bei der Herstellung der NCO-Semiprepolymeren können die Ausgangskomponenten a), b) und c) in beliebiger Reihenfolge miteinander umgesetzt werden. Vorzugsweise erfolgt die Umsetzung der Polyisocyanatkomponente a) mit einem Gemisch der Komponenten b) und c). Denkbar ist jedoch auch beispielsweise eine Arbeitsweise gemäß welcher man zunächst aus der Polyisocyanatkomponente a) bzw. einem Teil der Polyisocyanatkomponente a), vorzugsweise einem Diisocyanat der beispielhaft genannten Art, und einem einwertigen hydrophilen Polyetheralkohol der unter c) beispielhaft genannten Art entsprechend der Arbeitsweise der US-PS 3 920 598 ein "hydrophiles Diisocyanat", d.h. ein Diisocyanat mit seitenständiger hydrophiler Polyetherkette herstellt und dieses anschließend mit den übrigen Komponenten, insbesondere der Komponente b) zur Reaktion bringt.

Die Herstellung der NCO-Semiprepolymeren kann in Gegenwart der aus der Polyurethanchemie üblichen Katalysatoren wie beispielsweise Dibutylzinndilaurat, Zinndioctoat, Dibutylzinndichlorid, Triethylamin, Triethylendiamin oder Gemischen derartiger Katalysatoren erfolgen. Die Umsetzung kann in Substanz

oder auch in Gegenwart eines hydrophilen, mit Wasser mischbaren Lösungsmittels, wie beispielsweise Aceton oder N-Methylpyrrolidon erfolgen.

Im allgemeinen weisen die NCO-Semiprepolymeren bzw. ihre Lösungen in den genannten Lösungsmitteln bei 23° C eine Viskosität innerhalb des Bereichs von 500 bis 10 000 mPa.s auf.

Die zweite Stufe des erfindungsgemäßen Verfahrens besteht nun in der Dispergierung der NCO-Semiprepolymeren bzw. ihrer Lösungen in Wasser. Vorzugsweise erfolgt dieser Schritt innerhalb des Temperaturbereichs von 10 bis 80° C unter Verwendung von Mischaggregaten, die zur Entwicklung hoher Scherkräfte geeignet sind. Derartige Rührwerke sind beispielsweise das Ultraturrax-Gerät der Firma IKA, Typ T 45 N, Staufen, Deutschland.

Im Labor kann man auch kurzzeitig mit obigem Ultra-Turrax-Rührer (experimenteller Teil) vermischen und dann mit normalen Laborrührwerken von beispielsweise 50 bis 600 UPM nachrühren. Man kann aber auch erfindungsgemäß die Viskositäten besonders niedrig (<500 mPa.s) und die Hydrophilierungskomponenten an der oberen Grenze (beispielsweise 4 bis 12 Gew.-% an Ethylenoxidblöcken) einstellen und auf Hochleistungsrührwerke gänzlich verzichten.

Bei der Dispergierung entstehen aufgrund der zwischen den freien Isocyanatgruppen und dem Wasser ablaufenden Umsetzungen vernetzte Polyurethanharnstoffe in in Wasser instabil dispergierter Form. Aus diesen instabilen Dispersionen scheiden sich alsbald die erfindungsgemäßen Polyurethan-Polyharnstoff-Pulver ab. Sie können auf an sich bekannte Weise, beispielsweise durch Zentrifugieren oder Filtrieren isoliert werden.

Der Teilchendurchmesser der so erhaltenen Pulver läßt sich durch Variation der chemischen Zusammensetzung der NCO-Semiprepolymeren (insbesondere dem Grad der Hydrophilierung) und/oder durch die Verfahrensbedingungen beim Vermischen der NCO-Semiprepolymeren mit Wasser innerhalb breiter Bereiche von 5 bis 500 µm einstellen.

Die so erhaltenen erfindungsgemäßen Pulver stellen wertvolle Füllstoffe für Lacke, insbesondere für Zweikomponenten-Polyurethanlacke dar. Ihre Mitverwendung in derartigen Beschichtungsmitteln führt zu Lackoberflächen, die sich durch hohen Mattierungsgrad, sowie "warmen" leder- bzw. textilartigen Griff auszeichnen.

In den nachfolgenden Beispielen beziehen sich alle Prozentangaben, soweit nichts anderslautendes angemerkt, auf Gewichtsprozente.

Beispiele

In den nachfolgenden Beispielen wurden folgende Polyetheralkohole verwendet:

Polyether 1 (Komponente b)

Polyetherpolyol der mittleren Hydroxylfunktionalität 2,8, der Viskosität 630 mPa.s (25° C) und des Molekulargewicht 3700, hergestellt durch Propoxylierung eines Gemischs aus Trimethylolpropan und Propylenglykol.

Polyether 2 (nicht erfindungsgemäß, zum Vergleich)

Einwertiger Polyetheralkohol des Molekulargewichts 1080, hergestellt durch Alkoxylierung von n-Dodecanol unter Verwendung eines Gemischs aus Propylenoxid und Ethylenoxid im Molverhältnis 1:1,3.

Polyether 3 (nicht erfindungsgemäß, zum Vergleich)

Einwertiger Polyetheralkohol des Molekulargewichts 7000, hergestellt durch Alkoxylierung von Diethylenglykolmonobutylether unter Verwendung eines Gemischs aus Propylenoxid und Ethylenoxid im Molverhältnis 1:1,1.

Polyether 4 (Vergleich)

Polyetherdiol des Molekulargewichts 2000, hergestellt durch Alkoxylierung von Propylenglykol unter Verwendung eines Gemischs aus Propylenoxid und Ethylenoxid im Molverhältnis 1:1,1.

Polyether 5 (Vergleich)

Polyethertriol des Molekulargewichts 4700, hergestellt durch Alkoxylierung von Glycerin unter Verwendung eines Gemischs aus Propylenoxid und Ethylenoxid im Molverhältnis 1:1,1.

Polyether 6 (Komponente c)

Einwertiger Polyetheralkohol des Molekulargewichts 2150, hergestellt durch Ethoxylierung von n-Butanol und anschließende Propoxylierung des Ethoxylierungsprodukts (Gewichtsverhältnis Ethylenoxid:Propylenoxid = 79:21).

Polyether 7 (Komponente b)

Polyethertriol des Molekulargewichts 3000, hergestellt durch Propoxylierung von Trimethylolpropan.

Polyether 8 (Komponente b)

Polyethertriol des Molekulargewichts 6000, hergestellt durch Propoxylierung von Trimethylolpropan und anschließende Ethoxylierung des Propoxylierungsprodukts (Gewichtsverhältnis PO:EO = 87:13).

Polyether 9 (Komponente b)

Polyethertriol des Molekulargewichts 4800, hergestellt durch Propoxylierung von Trimethylolpropan und anschließende Ethoxylierung des Propoxylierungsprodukts (PO:EO-Gewichtsverhältnis = 83:17).

Beispiele 1 bis 15
(Allgemeine Arbeitsvorschrift)

Die im Vakuum entwässerten Polyether werden unter Stickstoff bei 50 °C mit dem Polyisocyanat versetzt und 1 h bei 80 °C zur Reaktion gebracht. Nach Abkühlen auf 23 °C werden die Viskositäten und die Gehalte an aktivem Isocyanat bestimmt.

Jeweils 100 g der so erhaltenen NCO-Semiprepolymeren werden unter Rühren mit einem Ultra-Turrax-Gerät (Firma IKA, Typ T 45 N, Staufen (Breisgau)/Deutschland) bei Raumtemperatur in 400 ml Wasser dispergiert (Rührleistung 10 000 UPM). Nach ca. 8 minütigem Rühren wird die Mischung während eines Zeitraums von 5 h bei ca. 45 °C nachgerührt (Rührleistung 250 UPM). Nach Abkühlen wird das vorliegende Pulver abgesaugt, getrocknet und gesiebt.

Die Beispiele 1, 2, 5, 6, 7 und 8 stellen Vergleichsbeispiele dar. Im Fall der Beispiele 1 und 2 wurde Dimethylolpropionsäure bei der Herstellung der NCO-Semiprepolymeren mitverwendet und dem Wasser eine zur Neutralisation der Carboxylgruppen ausreichende Menge an Natriumhydroxid zugesetzt. Diese Beispiele zeigen, daß eine ionische Modifizierung der NCO-Semiprepolymeren zur Herstellung eines Pulvers nicht ausreicht.

Beispiel 3 erfolgte ohne jegliche hydrophile Modifizierungen und führt ebenfalls nicht zum Erfolg.

In den Beispielen 5, 6, 7 und 8 wurden die Polyether 2 bis 5 verwendet, die zwar einen beträchtlichen Gehalt an Ethylenoxid aufweisen, jedoch in Form von Mischblöcken, die der Definition der Komponente c) nicht entsprechen.

Die experimentellen Ergebnisse sind in nachstehenden Tabellen zusammengefaßt. Die Mengenangaben bezüglich der Rezepturen beziehen sich jeweils auf g.

Tabelle 1 zeigt den Vergleich der ionisch modifizierten Produkte bzw. des überhaupt nicht hydrophil modifizierten Produkts mit einem analogen, erfindungsgemäßen Produkt.

Tabelle 2 zeigt vier Vergleichsbeispielen (Beispiele 5 bis 8).

Tabelle 3 beschreibt die erfindungsgemäßen Beispiele 9 und 10.

Tabelle 4 beschreibt die erfindungsgemäßen Beispiele 11 bis 15.

Tabelle 5 zeigt den Gehalt einiger erfindungsgemäßer Produkte an Harnstoff-, Urethan- und Ethylenoxid-Einheiten,

Tabelle 1

| Beispiele | 1 | 2 | 3 | 4 |
|---|---|---|---|---|
| Polyether 1 | 374 | 374 | 374 | 374 |
| T 80* | 195 | 195 | 195 | 195 |
| Dimethylolpropionsäure | 3 | 6 | - | - |
| Polyether 6 | - | - | - | 6 |
| Gew.-% Ethylenoxid | - | - | - | 1 |
| % $COO^{(-)}$ | 0,5 | 1,0 | - | - |
| Viskosität (23 °C) mPa.s | 1400 | 1800 | 800 | 800 |
| % NCO ber. | 14,1 | 13,7 | 14,3 | 13,7 |
| % NCO gef. | 14,0 | 13,3 | 14,1 | 13,3 |
| % NC0 n. 8 Tage/23 °C | 13,7 | 13,2 | 13,8 | 13,2 |
| Spontane Pulverbildung | nein | nein | nein | ja |

* Gemisch aus 80 % 2,4- und 20 % 2,6-Diisocyanatotoluol

Tabelle 2

| Beispiel | 5 | 6 | 7 | 8 |
|---|---|---|---|---|
| Poylether 1 | 374 | 374 | 374 | 374 |
| Polyether 2 | 9,6 | - | - | - |
| Polyether 3 | - | 10,6 | - | - |
| Polyether 4 | - | - | 10,6 | - |
| Polyether 5 | - | - | - | 6,6 |
| T 80 (T 65)* | 195 | 195 | 195 | 195 |
| Gew.-% Ethylenoxid | 1,0 | 1,0 | 1,0 | 1,0 |
| Viskosität mPa.s | 1000 | 950 | 1000 | 1000 |
| % NCO berechnet | 14,2 | 14,0 | 14,0 | 14,3 |
| % NCO gefunden | 14,0 | 13,7 | 13,9 | 14,0 |
| Spontane Pulverbildung | nein | nein | nein | nein |

*) in den Beispielen 5-10 T 80, in Beispiel 11 T 65 (65 % 2,4- und 35 % 2,6-Isomeres)

**) bei 50°C

Tabelle 3

| Beispiel | 9 | 10 |
|---|---|---|
| Polyether 1 | 374 | 374 |
| T 80 | 195 | - |
| IPDI* | - | - |
| MDI fl.** | - | 280 |
| Polyether 6 | 12 | 10 |
| % NCO ber. | 14,1 | 12,4 |
| % NCO gef. | 13,9 | 11,9 |
| Viskosität, mPa.s | 900 | 700 |
| % Ethylenoxid | 2,0 | 1,5 |
| Spontandispergierung | ja | ja |

*) Isophorondiisocyanat

**) Diisocyanodiphenylmethan, Isomerenverhältnis 4,4'/2,2' = 60:40

**Tabelle 4**

| Beispiel | 11 | 12 | 13 | 14 | 15 |
|---|---|---|---|---|---|
| Polyether 7 | 307 | - | - | - | - |
| Polyether 8 | - | 320 | - | - | - |
| Polyether 9 | - | - | 319 | 307 | 282 |
| T 65 | 178 | - | - | - | - |
| T 100* | - | 165 | - | - | - |
| T 80 | - | - | 168 | 168 | 168 |
| Polyether 6 | 15,5 | 15,5 | 12,5 | 25 | 50 |
| % Ethylenoxid | 2,5 | 2,5 | 2,0 | 4,0 | 8,0 |
| % NCO ber. | 14,5 | 14,5 | 14,5 | 14,5 | 14,5 |
| % NCO gef. | 14,1 | 14,0 | 13,9 | 13,9 | 13,6 |
| Viskosität mPa.s | 700 | 1400 | 1000 | 1000 | 900 |
| Mitt. Teil.-gr. µm | 35 | 27 | 20 | 15 | 23 |

*) 2,4-Diisocyanatotoluol

**) gemessen bei 45°C

***) enthält Grobanteile

Tabelle 5

| Beispiel | 11 | 12 | 13 | 14 | 15 |
|---|---|---|---|---|---|
| % Harnstoffgruppen | 9,7 | 9,6 | 9,6 | 9,6 | 9,4 |
| % Urethangruppen | 3,7 | 2,7 | 2,4 | 2,4 | 2,4 |
| % $-(CH_2CHR-O)_x-$ (über c) eingebaut | 3,0 | 3,0 | 2,5 | 5,0 | 10,0 |

## Patentansprüche

1. Verfahren zur Herstellung von vernetzten Polyurethan-Polyharnstoff-Pulvern, dadurch gekennzeichnet, daß man bei Raumtemperatur flüssige und/oder in einem gegenüber Isocyanatgruppen inerten, wasserlöslichen Lösungsmittel gelöste Isocyanat-Semiprepolymere mit einem NCO-Gehalt von 10 bis 20 Gew.-%, die durch Umsetzung von

   a) einer Polyisocyanatkomponente, bestehend aus mindestens einem organischen Polyisocyanat ausgewählt aus Polyisocyanaten der Formel

   $Q(NCO)_n$

   und Urethan-,Biuret-,Uretdion-, Carbodimid-, Uretonimin- und Isocyanurat-modifizierten Polyisocyanaten auf Basis dieser Polyisocyanate, wobei
   n 2-4 und
   Q einen aliphatischen Kohlenwasserstoffrest mit 2 bis 18, vorzugsweise 6 bis 10 C-Atomen,
   einen cycloaliphatischen Kohlenwasserstoffrest mit 4 bis 15, vorzugsweise 5 bis 10 C-Atomen,
   einen aromatischen Kohlenwasserstoffrest mit 6 bis 15, vorzugsweise 6 bis 13 C-Atomen,

oder einen araliphatischen Kohlenwasserstoffrest mit 8 bis 15, vorzugsweise 8 bis 13 C-Atomen, bedeuten,

mit

b) einer hydrophoben Polyolkomponente, bestehend aus mindestens einem Polyetherpolyol des Molekulargewichtsbereichs 400 bis 10.000, gegebenenfalls in Abmischung mit bis zu 10 Gew.-%, bezogen auf das Gesamtgewicht der Komponente b), an mehrwertigen Alkoholen eines unter 400 liegenden Molekulargewichts, wobei die Komponente b) weniger als 25 Gewichtsprozent an Ethylenoxideinheiten $-CH_2-CH_2-O-$ aufweist,

und

c) einer hydrophilen Polyetherkomponente, bestehend aus mindestens einem Alkohol, der eine Struktureinheit der Formel

$-(-CH_2-CHR-O-)_n-$

mit n = 15 bis 80 aufweist, wobei diese Struktureinheiten mindestens 70 Gew.-% des Gewichts der Komponente c) ausmachen, ausgewählt aus der Gruppe bestehend aus Polyethylenglykolen mit einem Molekulargewicht von 1000 bis 4000 und einwertigen Polyetheralkoholen von einwertigen Startermolekülen,

unter Einhaltung eines Äquivalentverhältnisses von Isocyanatgruppen zu gegenüber Isocyanatgruppen reaktionsfähigen Gruppen 5 : 1 bis 25 : 1 bei 20 bis 150° C hergestellt worden sind, wobei R jeweils für Wasserstoff oder eine Methylgruppe steht, mit der Maßgabe, daß mindestens 80 % der Reste R für Wasserstoff stehen, und wobei Art und Mengenverhältnisse der Komponente b) und c) so gewählt werden, daß die mittlere Hydroxylfunktionalität der Komponenten b) und c) bei 2, 3 bis 4, 0 liegt und die NCO-Semiprepolymeren einen Gehalt an, von der Komponente c) herrührenden, Struktureinheiten der Formel

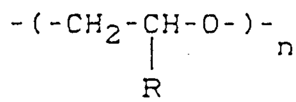

mit n = 15 bis 80 von 0,5 bis 12 Gew.-% aufweisen,

in Wasser dispergiert und das sich spontan bildende Pulver nach abgeklungener Reaktion aus dem wäßrigen Medium auf an sich bekannte Weise isoliert.

**2.** Verwendung der gemäß Anspruch 1 erhaltenen Polyurethan-Polyharnstoff-Pulver als organische Füllstoffe in Zweikomponenten-Polyurethanlacken.

## Claims

**1.** A process for the production of crosslinked polyurethane-polyurea powders, characterized in that isocyanate semiprepolymers having an NCO content of 10 to 20% which are liquid at room temperature and/or are dissolved in an isocyanate-inert, water-soluble solvent and which have been prepared by reaction of

a) a polyisocyanate component consisting of at least one organic polyisocyanate selected from polyisocyanates corresponding to the following formula:

$Q(NCO)_n$

in which

n = 2 to 4, preferably 2, and

Q is an aliphatic hydrocarbon radical containing from 2 to 18 and preferably from 6 to 10 carbon atoms, a cycloaliphatic hydrocarbon radical containing from 4 to 15 and preferably from 5 to 10 carbon atoms, an aromatic hydrocarbon radical containing from 6 to 15 and preferably from 6 to 13 carbon atoms or an araliphatic hydrocarbon radical containing from 8 to 15 and preferably from 8 to 13 carbon atoms,

and urethane-, biuret-, uretdione-, carbodiimide-, uretoneimine- and isocyanurate-modified

polyisocyanates based on these polyisocyanates,

with

b) a hydrophobic polyol component consisting of at least one polyether polyol having a molecular weight in the range from 400 to 10,000, optionally in the admixture with up to 10% by weight, based on the total weight of component b), of polyhydric alcohols having a molecular weight below 400, component b) containing less than 25% by weight ethylene oxide units $-CH_2-CH_2-O-$,

and

c) a hydrophilic polyether component consisting of an alcohol containing a structural unit corresponding to the following formula

$-(-CH_2-CHR-O-)_n-$

with n = 15 to 80, these structural units making up at least 70% of the weight of component c), selected from the group consisting of polyethylene glycols having a molecular weight of 1,000 to 4,000 and monohydric polyether alcohols of monofunctional starter molecules,

an equivalent ratio of isocyanate groups to isocyanate-reactive groups of 5:1 to 25:1 and a temperature of 20 to 150 °C being maintained during the reaction,

R being hydrogen or a methyl group, with the proviso that at least 80% of the substituents R are hydrogen, and the type and quantitative ratios of component b) and c) being selected so that the average hydroxyl functionality of components b) and c) is from 2.3 to 4.0 and the NCO semiprepolymers have a content of structural units - emanating from component c) - corresponding to the following formula

$$-(-CH_2-\underset{\displaystyle R}{\underset{|}{C}}H-O-)_n-$$

with n = 15 to 80, of from 0.5 to 12% by weight,

are dispersed in water and the powder spontaneously formed is isolated from the aqueous medium in known manner after the reaction has abated.

**2.** The use of the polyurethane-polyurea powders obtained by the process claimed in claim 1 as organic fillers in two-component polyurethane paints.

**Revendications**

**1.** Procédé pour la préparation de poudres réticulées de polyuréthanne-polyurée, caractérisé en ce qu'on disperse dans l'eau à la température ambiante des semi-prépolymères d'isocyanate liquides et/ou dissous dans un solvant hydrosoluble inerte vis-à-vis de groupes isocyanate, ayant une teneur NCO de 10 à 20% en poids, qui ont été préparés à une température de 20 à 150 °C par mise en réaction de

a) un composant de polyisocyanate constitué par au moins un polyisocyanate organique choisi parmi les polyisocyanates de formule

$Q(NCO)_n$

et par des polyisocyanates à base de ces polyisocyanates, modifiés par des groupes uréthanne, des groupes biuret, des groupes uretdione, des groupes carbodiimide, des groupes urétonimine et des groupes isocyanurate,

n étant égal à 2-4, et

Q représentant un radical d'hydrocarbure aliphatique contenant de 2 à 18, de préférence de 6 à 10 atomes de carbone,

un radical d'hydrocarbure cycloaliphatique contenant de 4 à 15, de préférence de 5 à 10 atomes de carbone,

un radical d'hydrocarbure aromatique contenant de 6 à 15, de préférence de 6 à 13 atomes de carbone, ou un radical d'hydrocarbure araliphatique contenant de 8 à 15, de préférence de 8 à 13 atomes de carbone,

avec

b) un composant de polyol hydrophobe constitué par au moins un polyétherpolyol du domaine de poids moléculaire de 400 à 10.000, éventuellement en mélange avec jusqu'à 10% en poids rapportés au poids total du composant b), d'alcools polyvalents d'un poids moléculaire inférieur à 400, le composant b) présentant moins de 25% en poids d'unités d'oxyde d'éthylène

$-CH_2-CH_2-O-$,

et

c) un composant de polyéther hydrophile constitué par au moins un alcool qui présente une unité de structure de formule

$-(-CH_2-CHR-O-)_n-$

avec n = 15 à 80, ces unités de structure représentant au moins 70% du poids du composant c), choisi parmi le groupe constitué par des polyéthylèneglycols ayant un poids moléculaire de 1.000 à 4.000 et par des polyéther-alcools monovalents de molécules d'amorçage monovalentes, tout en maintenant un rapport d'équivalent entre les groupes isocyanate et les groupes aptes à réagir vis-à-vis de groupes isocyanate de 5:1 à 25:1, R représentant respectivement un atome d'hydrogène ou un groupe méthyle, avec cette mesure qu'au moins 80% des radicaux R représentent un atome d'hydrogène et, le type et les proportions des composants b) et c) étant sélectionnés de telle sorte que la fonctionnalité hydroxyle moyenne des composants b) et c) se situe à 2,3-4,0 et que les semi-prépolymères NCO présentent une teneur en unités de structure provenant du composant c), répondant à la formule

$$-(-CH_2-\underset{\displaystyle R}{\underset{|}{CH}}-O-)_n-$$

avec n = 15 à 80, de 0,5 à 12% en poids,

et on isole la poudre qui se forme spontanément après arrêt brutal de la réaction, hors du milieu aqueux d'une manière connue en soi.

**2.** Utilisation des poudres de polyuréthanne-polyurée obtenues conformément à la revendication 1, comme matières de charge organiques dans des laques, des vernis ou des peintures de polyuréthanne à deux composants.